# EUROPÄISCHE PATENTANMELDUNG

(11) **EP 0 676 336 A2**
(43) Veröffentlichungstag der Anmeldung: **11.10.1995**
(21) Anmeldenummer: 95103212.7
(22) Anmeldetag: 07.03.1995
(51) Int. Cl.: B65D 17/50, B65D 5/70

(54) **Verfahren zum Abdecken einer Schnittkante einer Öffnung eines Behälters mit einem Schutzbezug**

(30) Priorität: 07.04.1994 DE 4411925
(71) Anmelder: Rüdiger Haaga GmbH, D-78727 Altoberndorf (DE)
(72) Erfinder: Stahlecker, Werner, D-70184 Stuttgart (DE); Müller, Berthold, D-73079 Süssen (DE)
(74) Vertreter: Wilhelm & Dauster Patentanwälte European Patent Attorneys

(57) **Zusammenfassung**

Bei einem Behälter ist eine Öffnung (6) vorhanden, deren Schnittkante (13) von einem Schutzbezug (14) abgedeckt ist. Der Schutzbezug ist derart geformt, daß er einen hülsenförmigen Bereich (20) aufweist, an dessen beiden stirnseitigen Enden sich jeweils ein ebener Bereich (18,19) anschließt. Der hülsenförmige Bereich (20) deckt die Schnittkante (13) ab. Der eine ebene Bereich (19) haftet an der inneren Oberfläche (8), der andere (18) an der äußeren Oberfläche des Behälters.

Der Schutzbezug wird aus einer einstückigen Folie hergestellt, die der die Öffnung enthaltenden Behälterwand zugeführt und danach verformt wird. Hierbei wird wenigstens einer der ebenen Bereiche gebildet und an die Behälterwand angeheftet.

Hierdurch kann ein einfach und kostengünstig herzustellender Kantenschutz für die Öffnung des Behälters erhalten werden.

## Beschreibung

Die Erfindung betrifft ein verfahren zum Abdecken einer Schnittkante einer Öffnung eines Behälters mit einem Schutzbezug, der einen die Schnittkante überdeckenden hülsenförmigen Bereich, einen an der äußeren Oberfläche des Behälters haftenden ebenen Bereich und einen an der inneren Oberfläche des Behälters haftenden ebenen Bereich aufweist.

Die Erfindung betrifft des weiteren einen Behälter mit wenigstens einer Behälterwand, die eine Öffnung aufweist, deren Schnittkante von einem Schutzbezug abgedeckt ist, der wenigstens einen Teil der inneren Oberfläche und der äußeren Oberfläche der Behälterwand überdeckt.

In dem US-Patent 4,397,401 ist ein verfahren zum Abdecken der Schnittkante beschrieben, bei dem der Schutzbezug aus zwei bogenartigen Folien hergestellt wird. Die beiden Folien werden der die Öffnung enthaltenden Behälterwand zugeführt. Hierbei wird die eine Folie auf die äußere Oberfläche und die andere Folie auf die innere Oberfläche der Behälterwand angelegt, wobei die Öffnung der Behälterwand von jeder Folie vollständig überdeckt wird. Die Abdeckung der Schnittkante erfolgt dadurch, daß eine der Folien oder beide Folien von der Oberfläche der Behälterwand in die Öffnung hinein umgeformt werden. Die beiden Folien werden im Bereich der Schnittkante miteinander verschmolzen, so daß ein einheitlicher Schutzbezug hergestellt wird, der infolge des Verschmelzens an der Schnittkante festhaftet. In beide Folien wird eine Öffnung eingebracht, deren Querschnitt etwas kleiner ist als der Querschnitt der ursprünglich vorhandenen, die abzudeckende Schnittkante aufweisenden Öffnung der Behälterwand. Das bei dem Einbringen der Öffnungen von beiden Folien abgetrennte Material wird als Abfall abgeführt.

Der nach dem bekannten Verfahren hergestellte hülsenförmige Bereich, der die Schnittkante überdeckt, ist durch Verformen, Verschmelzen und Einbringen von Öffnungen in die beiden Folien entstanden. Die beiden sich an den hülsenförmigen Bereich anschließenden ebenen Bereiche des Schutzbezuges werden durch die Abschnitte der beiden Folien gebildet, die an die Oberflächen der Behälterwand angelegt und nicht verformt worden sind.

Durch das US-Patent 4,116,359 ist es bei Blechdosen bekannt, die Füllöffnung mit einem sogenannten Pull-tab zu verschließen, welches aus einer Aluminiumschicht und einer daran haftenden Kunststoffolie besteht. Während das Pull-tab mit einem Dorn ein Stück in die Füllöffnung hineingedrückt wird, trennt man die Kunststoffolie in der Weise ab, daß sie um die Kante der Füllöffnung gelegt wird.

Es ist die Aufgabe der Erfindung, bei einem Behälter einen Kantenschutz aufzuzeigen, der einfach und kostengünstig herzustellen ist.

Die Aufgabe wird bei einem Verfahren der eingangs genannten Art dadurch gelöst, daß der Schutzbezug aus einer einstückigen Folie hergestellt wird, die der die Öffnung enthaltenden Behälterwand zugeführt und danach verformt wird, wobei wenigstens einer der ebenen Bereiche gebildet und an die Behälterwand angeheftet wird.

Die Aufgabe wird bei einem Behälter der eingangs genannten Art dadurch gelöst, daß der Schutzbezug einstückig hergestellt ist und nur den an die Öffnung angrenzenden Bereich der äußeren Oberfläche der Behälterwand überdeckt.

Das erfinderische Verfahren und die erfinderische Ausbildung des Schutzbezuges führen zu einer wesentlichen Vereinfachung in bezug auf die Herstellung und die Anbringung des Schutzbezuges bei der Schnittkante. Ein Verschmelzen von Folienmaterial im Bereich der Schnittkante findet nicht statt. Auch ein Anheften von verschmelzenden Folien an die Schnittkante ist nicht erforderlich.

Für den Schutzbezug können einstückige Folien von unterschiedlicher Form verwendet werden, die eine wenig arbeitsaufwendige Anbringung bei der Öffnung gestatten. Abhängig von der Form der zugeführten Folie muß beim Anbringen an der Schnittkante eine kleinere oder größere Anzahl von Arbeitsschritten durchgeführt werden. Die Folie kann beim Zuführen bereits so weit vorgeformt sein, daß nur noch einer der ebenen Bereiche durch Verformen der Folie hergestellt und an die Behälterwand angeheftet werden muß.

Die ebenen Bereiche des Schutzbezuges sind nach dem Zuführen und Verformen der Folie an die innere und die äußere Oberfläche der Behälterwand angeheftet. Der die Schnittkante überdeckende, hülsenförmige Bereich des Schutzbezuges braucht nicht an der Schnittkante angeheftet zu sein. Es ist aber bei bestimmten Ausbildungen der Erfindung möglich, daß der Schutzbezug auch an der Schnittkante angeheftet ist.

Je nach der Form der zugeführten Folie fällt bei der Herstellung und Anbringung des Schutzbezuges bei der Schnittkante entweder kein Abfall oder nur wenig Abfall an Folienmaterial an. Gegenüber dem bekannten Verfahren wird somit eine erhebliche Materialersparnis erreicht.

Die Erfindung kann sinnvoll eingesetzt werden bei allen Behältern, bei denen verhindert werden soll, daß ein Medium, insbesondere das Füllgut, in die Behälterwand eindringt. Im Bereich der Öffnung ist die Oberfläche der Behälterwand häufig aufgebrochen, insbesondere dann, wenn die Öffnung durch Schneiden oder Stanzen hergestellt ist. Durch das Anbringen des Schutzbezuges kann im Bereich der Schnittkante ein gleichartiger oder ähnlicher Schutz hergestellt werden, wie er auch in den anderen Bereichen des Behälters besteht. Auf die äußere Gestalt des Behälters kommt es nicht an.

In vorteilhafter Weise wird die Folie mit Hilfe von Wärme verformt und/oder an die Behälterwand angeheftet. Hierbei eignet sich für die Wärmeeinwirkung insbesondere Heißsiegeln.

In vorteilhafter Weiterbildung wird für die Herstellung des Schutzbezuges eine Folie verwendet, die aus einem ebenen Abschnitt und einem hülsenförmigen Abschnitt gebildet wird. Es ist hierbei möglich, die Folie in dieser Form der Behälterwand zuzuführen oder aber diese Form erst nach dem Zuführen bei der Behälterwand herzustellen. Der ebene Abschnitt wird an die innere oder an die äußere Oberfläche der Behälterwand angelegt und angeheftet, wobei das Anheften vor oder nach dem vollständigen Verformen oder zeitgleich mit dem vollständigen Verformen der Folie zu dem Schutzbezug erfolgen kann. Der an die Oberfläche angelegte und angeheftete ebene Abschnitt der Folie bildet einen der beiden ebenen Bereiche des Schutzbezuges.

Der hülsenförmige Abschnitt wird derart in die Öffnung der Behälterwand geführt, daß er die Schnittkante der Öffnung überdeckt und mit einem überragenden Abschnitt aus der Öffnung herausragt. Der innerhalb der Öffnung liegende Teil des hülsenförmigen Abschnitts der Folie bildet den hülsenförmigen Bereich des Schutzbezuges, der die Schnittkante überdeckt. Der hülsenförmige Abschnitt kann, wie erwähnt, bereits vor dem Zuführen der Folie gebildet sein oder erst nach dem Zuführen durch entsprechendes Verformen der Folie bei der Behälterwand hergestellt werden.

Der die Öffnung der Behälterwand überragende Abschnitt des hülsenförmigen Abschnitts der Folie wird verformt und an die Oberfläche der Behälterwand, die dem ebenen Abschnitt der Folie abgewandt ist, angeheftet. Hierdurch wird der zweite ebene Bereich des Schutzbezuges gebildet.

In vorteilhafter Ausgestaltung besitzt die Folie eine bogenartige Gestalt, aus der der hülsenförmige Abschnitt herausgeformt wird. Es ist vorteilhaft, wenn eine Öffnung in die bogenartige Folie eingebracht wird, wobei der Randbereich zu dem hülsenförmigen Abschnitt verformt wird.

In vorteilhafter Weiterbildung wird die Folie gegen die innere Oberfläche der Behälterwand angelegt und angeheftet. Dies geschieht derart, daß ihr ebener Abschnitt eine Schutzschicht für wenigstens einen Teil der inneren Oberfläche des Behälters bildet. In diesem Fall kann die üblicherweise vorhandene Schutzschicht für die innere Oberfläche des Behälters auch als Schutzbezug für die Schnittkante der Öffnung des Behälters verwendet werden.

Bei einer anderen vorteilhaften Ausgestaltung wird die Folie derart gegen die innere Öberfläche und die äußere Oberfläche der Behälterwand angelegt, daß nur der an die Schnittkante angrenzende Bereich der inneren Oberfläche und/oder der äußeren Oberfläche der Behälterwand bedeckt wird.

Bei einer vorteilhaften Ausgestaltung wird vorgesehen, daß die der Behälterwand zugeführte Folie ein hülsenförmige Gestalt hat. Diese hülsenförmige Folie wird derart in die Öffnung geführt, daß ein die Schnittkante abdeckender Abschnitt, ein die Öffnung über die äußere Oberfläche hinaus überragender Abschnitt und ein die Öffnung über die innere Oberfläche hinaus überragender Abschnitt gebildet werden. Nach der Zuführung der derart vorgeformten Folie werden die die Öffnung jeweils überragenden Abschnitte umgeformt und gegen die ihnen zugewandten Oberflächen der Behälterwand angeheftet. Die umgeformten und gegen die Oberflächen der Behälterwand angehefteten Abschnitte bilden nun die ebenen Bereiche des Schutzbezuges. Der hülsenförmige Bereich des Schutzbezuges wird durch den innerhalb der Öffnung verbliebenen Rest der hülsenförmigen Folie gebildet.

Bei einem Behälter mit einem erfindungsgemäß ausgebildeten Kantenschutz ist ein Schutzbezug bei der Schnittkante der Öffnung des Behälters angebracht, der einstückig hergestellt ist und nur den an die Öffnung angrenzenden Bereich der äußeren Oberfläche der Behälterwand überdeckt.

In vorteilhafter Ausgestaltung überdeckt der Schutzbezug nur den an die Öffnung angrenzenden Bereich der inneren Oberfläche der Behälterwand. Der Schutzbezug hat dann eine nietenartige Form. Er kann mit sehr geringem Materialaufwand hergestellt werden.

Bei einer anderen vorteilhaften Ausgestaltung ist der Schutzbezug derart ausgebildet, daß er die innere Oberfläche eines Deckels des Behälters bedeckt. Es ist vorteilhaft, wenn der den Deckel bedeckende Schutzbezug zugleich die Schutzschicht der inneren Oberfläche des Deckels bildet. Die bei einem Behälter in der Regel ohnehin erforderliche Schutzschicht, die beispielsweise ein Eindringen des Füllgutes durch die Oberfläche in die Behälterwand verhindern soll, wird dann zugleich auch als Schutzbezug für die Schnittkante der Öffnung des Behälters verwendet. Man kann dabei so vorgehen, daß im Bereich der Öffnung der Karton abgetragen, ein Loch in die Schutzschicht gestanzt und anschließend die Schutzschicht um die zu schützende Kante gelegt wird.

In vorteilhafter Weiterbildung ist eine Aufreißlasche an die äußere Oberfläche der Behälterwand angeheftet. Die Aufreißlasche kann, beispielsweise nach dem Befüllen des Behälters, mit dem Schutzbezug der Schnittkante verbunden werden, so daß die Öffnung dichtend verschlossen wird.

Weitere Vorteile und Merkmale ergeben sich aus den zu den Figuren beschriebenen Ausführungsbeispielen.

Es zeigen:
Figur 1 eine längsgeschnittene Ansicht eines zylindrischen Behälters mit einem Boden und einem eine Öffnung aufweisenden Deckel,
Figur 2 eine geschnittene Ansicht des Deckels des Behälters der Figur 1 mit einer durch eine Aufreißlasche abgedeckten Öffnung,
Figur 3 eine Draufsicht auf die Außenseite des Deckels des Behälters der Figur 1,
Figur 4 eine geschnittene Ansicht einer Öffnung eines Deckels mit einer ersten Ausführungsform eines Schutzbezuges in vergrößerter Darstellung,
Figuren 5a bis 5e die Arbeitsschritte eines ersten Verfahrens zur Herstellung des Schutzbezuges der Figur 4,
Figuren 6a bis 6d die Arbeitsschritte eines zweiten Verfahrens zur Herstellung des Schutzbezuges der Figur 4,
Figuren 7a bis 7c die Arbeitsschritte eines dritten Verfahrens zur Herstellung des Schutzbezuges der Figur 4,
Figuren 8a bis 8c die Arbeitsschritte eines vierten Verfahrens zur Herstellung des Schutzbezuges der Figur 4,
Figur 9 eine geschnittene Ansicht einer Öffnung eines Deckels mit einer zweiten Ausführungsform eines Schutzbezuges in vergrößerter Darstellung,
Figuren 10a bis 10c die Arbeitsschritte eines Verfahrens zur Herstellung des Schutzbezuges der Figur 9,
Figur 11 eine geschnitte Ansicht einer Öffnung eines Deckels mit einer dritten Ausführungsform eines Schutzbezuges in vergrößerter Darstellung,
Figuren 12a bis 12f ein Verfahren zur Herstellung der Öffnung und des Schutzbezuges der in Figur 11 dargestellten Ausführungsform,
Figur 13 eine geschnittene Ansicht einer Öffnung eines Deckels mit einer an die Wand des Deckels angehefteten Aufreißlasche in geöffneter Position,
Figur 14 eine geschnittene Ansicht einer Öffnung eines Deckels mit einer mit dem Schutzbezug vebundenen Aufreißlasche in geschlossener Position,
Figur 15 ein für die Herstellung mehrerer Deckel vorbereitetes Kartonband.

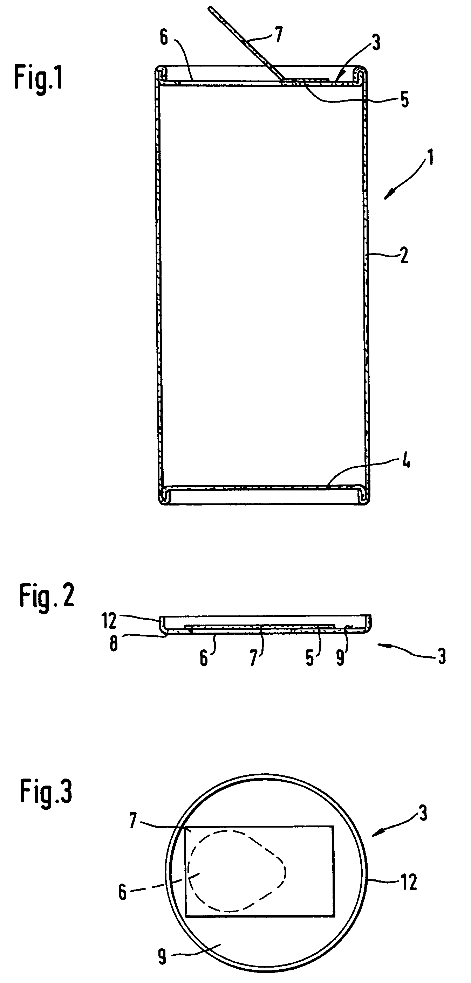

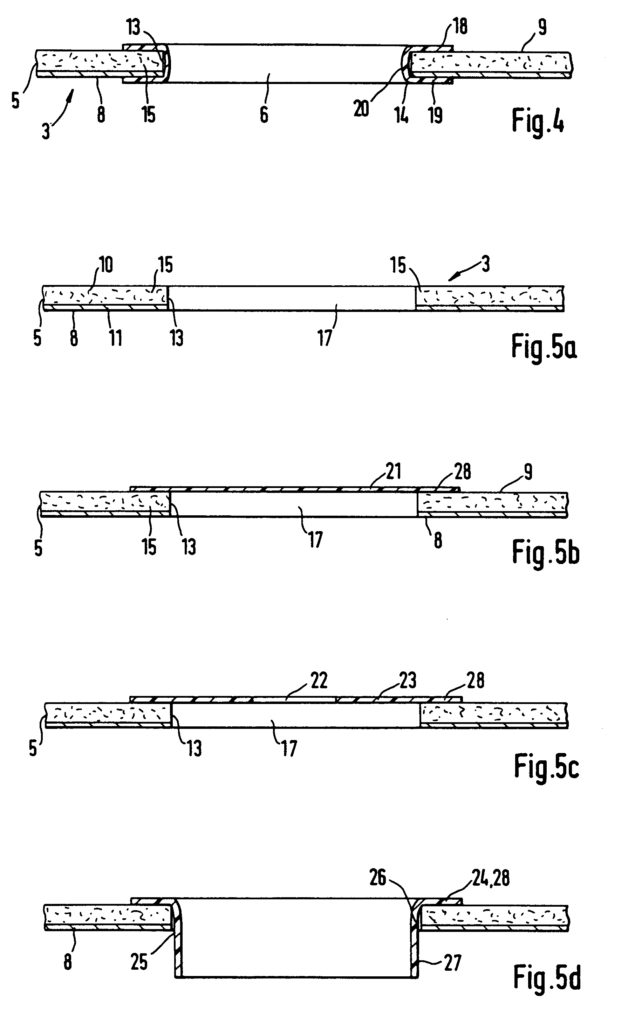

Der in Figur 1 dargestellte Behälter 1 ist als Dose ausgebildet. Er setzt sich aus einem zylindrischen Mantel 2, einem kreisförmigen Boden 4 und einem kreisförmigen Deckel 3 zusammen. Der Deckel 3 ist mit einer Öffnung 6 versehen, deren Rand mit einem weiter unten näher erläuterten Schutzbezug 14, 34, 44 (vgl. Fig. 4, 9, 11) abgedeckt ist und die mit einer Aufreißlasche 7 verschlossen werden kann. In Figur 1 ist die Aufreißlasche 7 in einer von der Öffnung 6 weggeklappten Position dargestellt. Die Behälterwand 5 des Deckels 3, die Behälterwand des Bodens 4 und die Behälterwand des Mantels 2 sind unlösbar miteinander verbunden und bilden zusammen eine einheitliche Behälterwand des Behälters 1.

Wie aus Figuren 2 und 3 ersichtlich ist, ist der Umfangsbereich des Deckels 3 mit einem abragenden Rand 12 versehen, ebenso der Boden 4. Zur Herstellung des Behälters 1 wird das eine stirnende des Mantels 2 um den Rand 12 des Deckels 3 und das andere Stirnende um den abstehenden Rand des Bodens 4 umgebördelt und sodann mit dem Deckel 3 und dem Boden 4 unlösbar, beispielswiese durch Heißsiegeln, verbunden.

Das Befüllen des Behälters 1 ist für einen nach diesem Verbinden liegenden Arbeitsschritt vorgesehen, so daß die Umfangskanten des Deckels 3 und des Bodens 4 sowie die Stirnkanten des Mantels 2 nicht mit dem Füllgut in Berührung kommen können. Das Befüllen erfolgt durch die Öffnung 6, die als Füllöffnung dient.

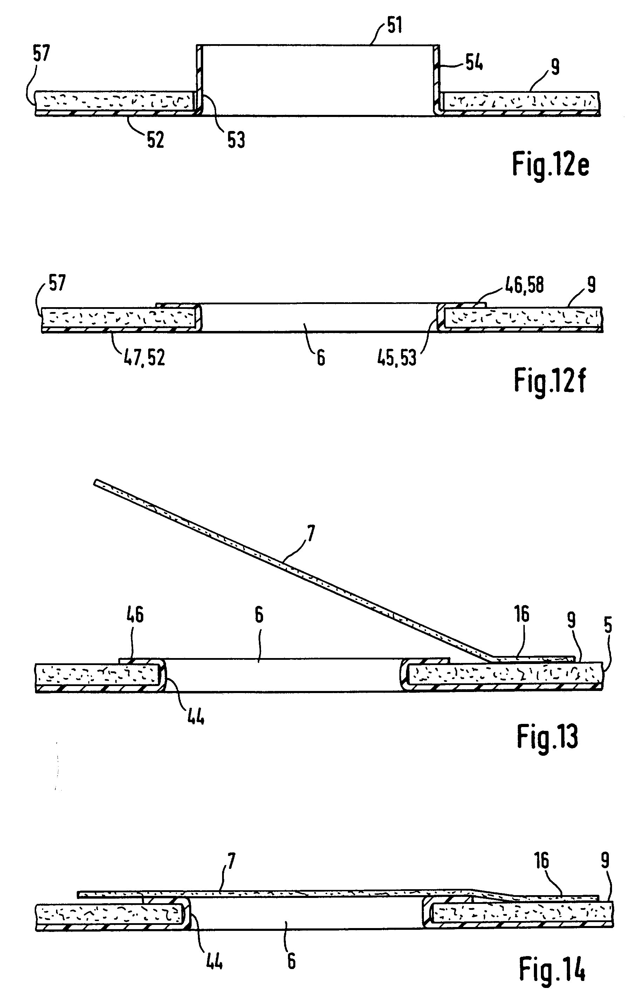

Der fertige Deckel 3 ist im Bereich der Öffnung 6 mit der bereits erwähnten Aufreißlasche 7 versehen, die vor dem Befüllen mit einem Ende 16 an der äußeren Oberfläche 9 des Deckels 3 befestigt ist und eine von der Öffnung 6 weggeklappte Position einnimmt (vergleiche Figur 13). Die Befestigung des einen Endes 16 der Aufreißlasche 7 an der äußeren Oberfläche 9 des Deckels 3 kann beispielsweise durch Heißsiegeln erfolgen. Nach dem Füllvorgang wird die Öffnung 6 durch die Aufreißlasche 7 dicht verschlossen, so daß sie die in Figur 14 dargestellte Position einnimmt. Sie kann zum Entleeren des Behälters 1 von dem Deckel 3 abgerissen werden. Die Öffnung 6 dient damit auch als Entleeröffnung.

Bei einer anderen, nicht erläuterten Ausführungsform ist bei dem fertigen Deckel 3 die Aufreißlasche 7 bereits vor dem Befüllen dichtend verschlossen, so daß die in Fig. 14 dargestellte Position eingenommen wird. Die Öffnung 6 dient dann nur als Entleeröffnung.

Wie insbesondere aus Figur 5a ersichtlich ist, ist die Behälterwand 5 aus einer Trägerschicht 10 und einer Schutzschicht 11 zusammengesetzt. Die Schutzschicht 11 bedeckt die innere Oberfläche 8 des gesamten Behälters 1, also des Mantels 2, des Deckels 3 und des Bodens 4. Die Schutzschicht 11 dient dazu, das Füllgut zu schützen und dessen Eindringen in die Behälterwand zu verhindern. Sie kann aus mehreren Materiallagen zusammengesetzt sein, beispielswiese auch eine Lage aus Aluminium enthalten. Die Trägerschicht 10 besteht aus Papier oder Karton, wobei auch hier sowohl eine als auch mehrere Materiallagen denkbar sind.

Vor der Fertigstellung ist der Deckel 3 mit einer Öffnung 17 versehen (vgl. Fig. 5a), die durch die Behälterwand 5 hindurchgeht und deren Rand eine ungeschützte Schnittkante 13 bildet. Diese Schnittkante 13 ist nach der Fertigstellung des Deckels 3 durch einen Kantenschutz abgedeckt. Die mit dem Kantenschutz versehene Öffnung 6 des fertigen Deckels 3 hat wenigstens annähernd die gleiche Gestalt wie die Öffnung 17 des unfertigen Deckels 3, jedoch einen kleineren Querschnitt.

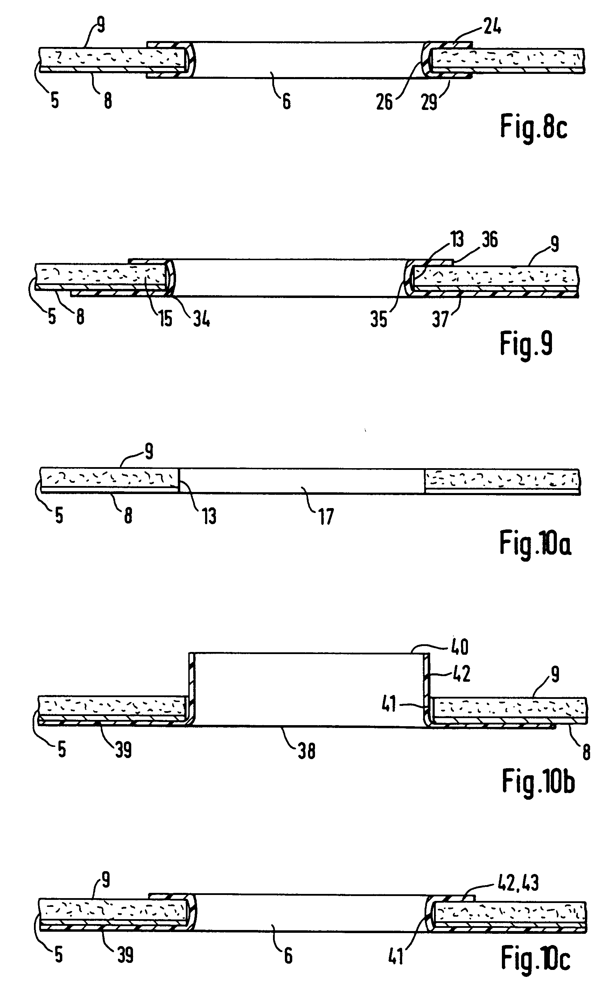

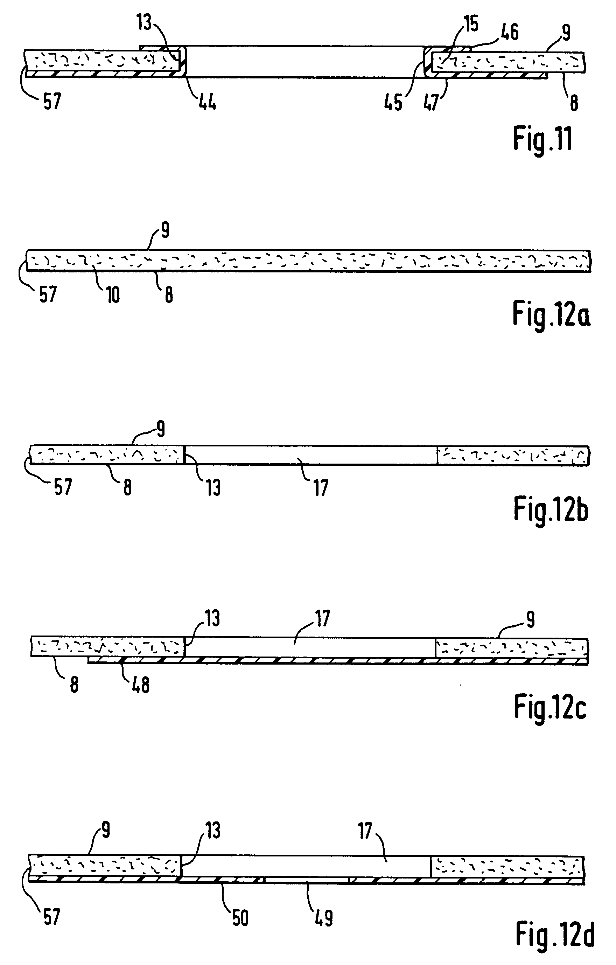

Der Kantenschutz wird in einer ersten Ausführungsform (Figur 4) durch einen Schutzbezug 14, in einer zweiten Ausführungsform (Figur 9) durch einen Schutzbezug 34 und in einer dritten Ausführungsform (Figur 11) durch einen Schutzbezug 44 gebildet. Der Schutzbezug 14, 34, 44 ist siegelfähig und hat gleiche oder ähnliche Eigenschaften wie die Schutzschicht 11, damit der Schutz des Füllgutes im Bereich der Öffnung 6 gewährleistet ist. Der Schutzbezug 14, 34, 44 ist bei allen Ausführungsformen einstückig hergestellt.

Bei der in Figur 4 dargestellten ersten Ausführungsform hat der Schutzbezug 14 die Gestalt eines Nietes. Der mittlere Bereich 20 des nietenförmigen Schutzbezuges 14 ist in Umfangsrichtung durchgehend und bedeckt die Schnittkante 13 der Öffnung 17 (vgl. auch Fig. 5a).

An den mittleren Bereich 20 schließt sich beidseitig jeweils ein ebener Bereich 18 und ein ebener Bereich 19 an. Der ebene Bereich 18 ist an die äußere Oberfläche 9 und der ebene Bereich 19 an die innere Oberfläche 8 der Behälterwand 5 angeheftet. Hierbei wird nur der an die Schnittkante 13 unmittelbar angrenzende Bereich 15 der Behälterwand 5 von den ebenen Bereichen 18 und 19 des Schutzbezuges 14 bedeckt. Der mittlere, hülsenförmige Bereich 20 des Schutzbezuges 14 liegt bei der in Figur 4 dargestellten Ausführungsform nicht gegen die Schnittkante 13 an.

Es ist möglich, bei einer anderen, nicht dargestellten Ausführungsform den Schutzbezug 14 an die Schnittkante 13 anzulegen oder ihn an die Schnittkante 13,beispielsweise durch Heißsiegeln, anzuheften.

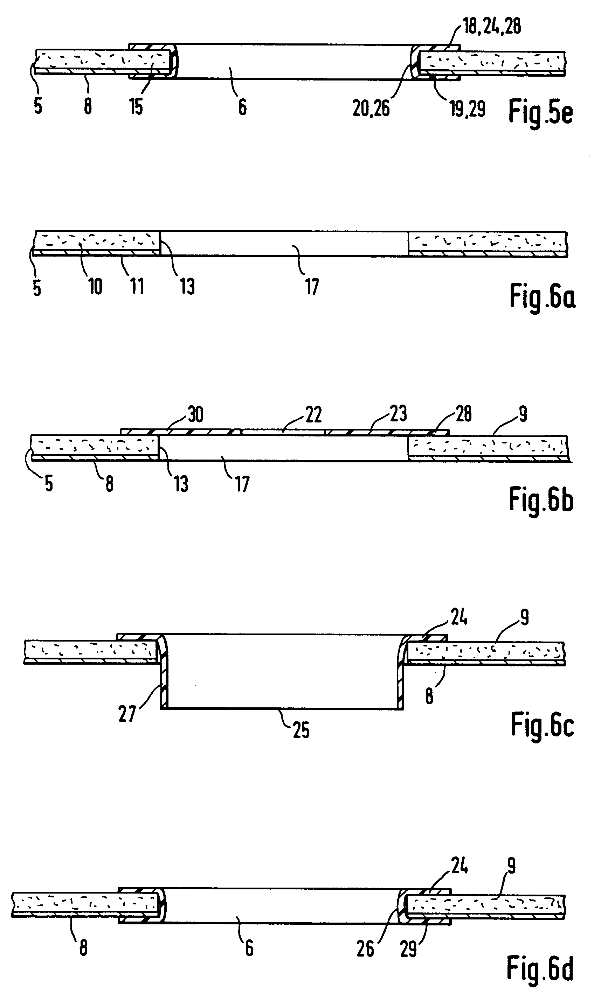

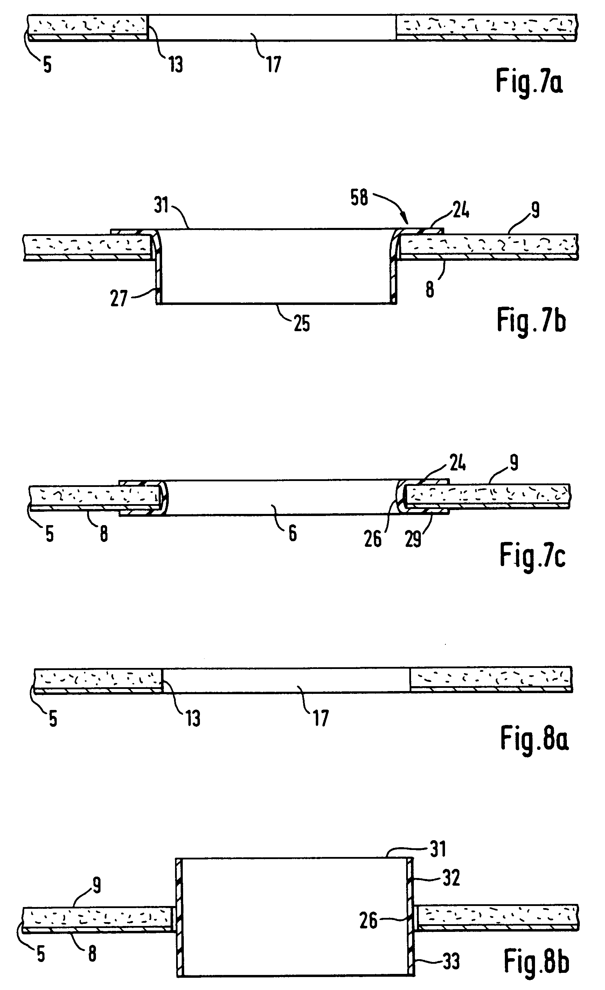

Der Schutzbezug 14 kann unter Anwendung unterschiedlicher Verfahren bei der Öffnung 6 hergestellt und angebracht werden. Ein erstes Verfahren ist in Figuren 5a bis 5e, ein zweites Verfahren in Figuren 6a bis 6d, ein drittes Verfahren in Figuren 7a bis 7c und ein viertes Verfahren in Figuren 8a bis 8c dargestellt. Der Behälterwand 5 wird hierbei jeweils eine Folie zugeführt, die bei jedem der Verfahren anders ausgebildet ist und die zu dem in Figur 4 dargestellten Schutzbezug 14 geformt und an der Behälterwand 5 befestigt wird.

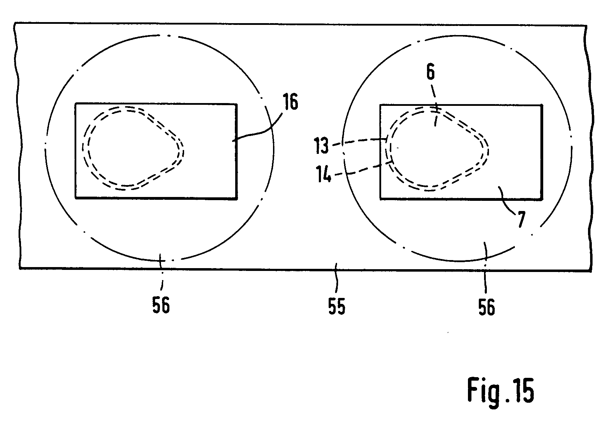

Bei dem in Figuren 5a bis 5e dargestellten ersten Verfahren wird eine Behälterwand 5, die nach dem Zusammensetzen zu dem Behälter 1 den fertigen Deckel 3 bildet, vorgelegt. Die Behälterwand 5 besteht, wie oben erwähnt, aus einer Trägerschicht 10 aus Papier oder Karton und einer Schutzschicht 11, die die innere Oberfläche 8 des Behälters 1 bildet. Die Behälterwand 5 kann beispielsweise in Form eines Kartonbandes 55 (vgl. Fig. 15) vorgelegt werden, das Segmente 56 enthält, aus denen in einem späteren Arbeitsgang die Deckel 3 gebildet werden.In die Behälterwand 5 ist, wie oben erwähnt wurde, eine durchgehende Öffnung 17 eingebracht. Im Bereich der Schnittkante 13 ist das Material der Trägerschicht 10 nicht von der Schutzschicht 11 bedeckt, so daß ohne entsprechenden Kantenschutz das Füllgut in die Tragerschicht 10 eindringen könnte (vergleiche Figur 5a).

Bei dem in Figur 5b dargestellten Arbeitsschritt wird eine bogenförmige Folie 21 auf die äußere Oberfläche 9 der Behälterwand 5 angelegt, so daß sie die Öffnung 17 vollständig überdeckt und mit einem Randabschnitt 28 bei dem an die Schnittkante 13 angrenzenden Bereich 15 der Behälterwand 5 aufliegt. Die bogenartige Folie 21 wird durch Heißsiegeln des Randabschnitts 28 mit der Behälterwand 5 verbunden.

In einem nachfolgenden, in Figur 5c dargestellten Arbeitsschritt wird eine Öffnung 22, vorzugsweise durch Stanzen, in die Folie 21 eingebracht, so daß ein die Schnittkante 13 in Richtung zum Zentrum der Öffnung 17 überlappender Abschnitt 23 bei der Folie 21 gebildet wird. Die Form der in die Folie 21 eingebrachten Öffnung 22 entspricht wenigstens annähernd der Form der Öffnung 17 der Behälterwand 5. Allerdings ist der Querschnitt der Öffnung 22 kleiner als der Querschnitt der Öffnung 17.

In einem nachfolgenden, in Figur 5d dargestellten Arbeitsschritt wird der überlappende Abschnitt 23 durch die Öffnung 17 hindurch, vorzugsweise durch Einwirkung von Wärme, umgeformt, so daß ein bei der äußeren Oberfläche 9 der Behälterwand 5 verbleibender ebener Abschnitt 24, der dem Randabschnitt 28 entspricht, und ein verformter, hülsenförmiger Abschnitt 25 gebildet wird. Der hülsenförmige Abschnitt 25 besteht hierbei aus einem die Schnittkante 13 abdeckenden Abschnitt 26 und einem die Öffnung 17 überragenden Abschnitt 27.

In einem nachfolgenden Arbeitsschritt, der in Figur 5e dargestellt ist, wird der überragende Abschnitt 27 in Richtung zu der inneren Oberfläche 8 der Behälterwand 5 umgeformt, so daß ein weiterer ebener Abschnitt 29 bei der Folie 21 gebildet wird. Vor oder bei dem Umformen des überragenden Abschnittes 27 kann die Folie 21 zusätzlich gespannt werden, so daß der die Schnittkante 13 abdeckende Abschnitt 26 gegen die Schnittkante 13 zur Anlage kommt. Der ebene Abschnitt 29 der Folie 21 wird schließlich -vorzugsweise durch Heißsiegeln- an die innere Oberfläche 8 der Behälterwand 5 angeheftet. Die Folie 21 ist nunmehr zu dem Schutzbezug 14 verformt und an die Behälterwand 5 angeheftet. Hierbei entspricht der ebene Abschnitt 24 der Folie 21 dem ebenen Bereich 18 des Schutzbezuges 14, der die Schnittkante 13 abdekkende Abschnitt 26 dem mittleren Bereich 20 und der ebene Abschnitt 29 dem ebenen Bereich 19.

Bei dem in Figuren 6a bis 6c dargestellten zweiten Verfahren wird ebenfalls eine Behälterwand 5 vorgelegt (vgl. Fig. 6a), die der Behälterwand 5 der Figur 5a entspricht.

Bei einem ersten, in Figur 6b dargestellten Arbeitsschritt wird der Behälterwand 5 eine Folie 30 zugeführt. Diese Folie 30 hat bereits beim Zuführen die Gestalt, die bei dem vorbeschriebenen ersten Verfahren in Figur 5c dargestellt ist. Die Folie 30 besitzt also eine bogenförmige, ebene Form und ist mit einer Öffnung 22 versehen. Die bogenförmige Folie 30 wird auf die äußere Oberfläche 9 der Behälterwand 5 angelegt und mit dieser, vorzugsweise durch Heißsiegeln, verbunden, so daß ein Randabschnitt 28 und ein überlappender Abschnitt 23 gebildet werden.

In den nachfolgenden, in Figuren 6c und 6d dargestellten Arbeitsschritten wird ebenso verfahren wie bei den Arbeitsschritten, die in Figuren 5d und 5e des vorbeschriebenen ersten Verfahrens dargestellt sind. Der überlappende Abschnitt 23 wird also durch die Öffnung 17 hindurch umgeformt, so daß ein hülsenförmiger Abschnitt 25 gebildet wird. Sodann wird der die Öffnung 17 überragende Abschnitt 27 in Richtung zu der inneren Oberfläche 8 der Behälterwand 5 umgeformt und an diese angeheftet.

Bei dem in Figuren 7a bis 7c dargestellten dritten Verfahren wird ebenfalls eine Behälterwand 5 vorgelegt (vergleiche Figur 7a), die der Behälterwand 5 der Figur 5a entspricht.

In einem ersten, in Figur 7b dargestellten Arbeitsschritt wird der Behälterwand 5 eine Folie 58 zugeführt. Diese Folie 58 hat bereits beim Zuführen die Gestalt, die in Figur 5d dargestellt ist. Die Folie 58 besitzt also einen ebenen Abschnitt 24 und einen hülsenförmigen Abschnitt 25. Sie wird derart in die Öffnung 17 eingeführt, daß diese von dem hülsenförmigen Abschnitt 25 durchdrungen wird. Der zur Anlage an die äußere Oberfläche 9 gelangende ebene Abschnitt 24 der Folie 58 wird, vorzugsweise durch Heißsiegeln, an die Behälterwand 5 angeheftet.

In einem nachfolgenden, in Figur 7c dargestellten Arbeitsschritt wird der die Öffnung 17 überragende Abschnitt 27 in Richtung zu der inneren Oberfläche 8 der Behälterwand 5 umgeformt und dort, vorzugsweise durch Heißsiegeln, befestigt. Dies geschieht in gleicher Weise wie bei dem in Figur 5e dargestellten Arbeitsschritt.

Bei dem in Figuren 8a bis 8c dargestellten vierten Verfahren wird einer Behälterwand 5 (vergleiche Figur 8a), die ebenso ausgebildet ist wie die in Figuren 5a, 6a und 7a dargestellte Behälterwand 5, in einem ersten Arbeitsschritt (vergleiche Figur 8b) eine hülsenförmige Folie 31 zugeführt. Die hülsenförmige Folie 31 wird derart in die Öffnung 17 der Behälterwand 5 eingeführt, daß ein die Schnittkante 13 abdeckender Abschnitt 26, ein die Öffnung 17 über die äußere Oberfläche 9 überragender Abschnitt 32 und ein die Öffnung 17 über die innere Oberfläche 8 überragender Abschnitt 33 gebildet werden.

In einem nachfolgenden, in Figur 8c dargestellten Arbeitsschritt wird der überragende Abschnitt 32 in Richtung zu der äußeren Oberfläche 9 umgeformt und dort, vorzugsweise durch Heißsiegeln, angeheftet. Der überragende Abschnitt 33 wird in Richtung zu der inneren Oberfläche 8 umgeformt und dort, vorzugsweise durch Heißsiegeln, angeheftet.

Die in Figur 9 dargestellte zweite Ausführungsform eines Schutzbezuges 34 besteht aus einem mittleren Bereich 35 und zwei sich beidseitig an den mittleren Bereich 35 anschließenden ebenen Bereichen 36 und 37. Der ebene Bereich 36 haftet an der äußeren Oberfläche 9 der Behälterwand 5 und der ebene Bereich 37 haftet an der inneren Oberfläche 8 der Behälterwand 5. Der ebene Bereich 36 überdeckt nur den an die Schnittkante 13 unmittelbar angrenzenden Bereich 15 der Behälterwand 5, der ebene Bereich 37 erstreckt sich über einen größeren Bereich, vorzugsweise über die gesamte innere Oberfläche 8 des Deckels 3.

Bei dem in Figuren 10a bis 10c dargestellten Verfahren zum Herstellen und Anbringen des in Figur 9 dargestellten Schutzbezuges 34 wird eine Behälterwand 5 vorgelegt, die der in Figuren 5a, 6a, 7a und 8a dargestellten Behälterwand 5 entspricht.

In einem ersten, in Figur 10b dargestellten Arbeitschritt wird eine Folie 38 der Behälterwand 5 zugeführt. Die Folie 38 besteht aus einem ebenen Abschnitt 39 und einem hülsenförmigen Abschnitt 40. Der ebene Abschnitt 39 wird an die innere Oberfläche 8 der Behälterwand 5 angelegt und angeheftet. Der hülsenförmige Abschnitt 40 wird derart in die Öffnung 17 hineingeführt, daß ein die Schnittkante 13 abdeckender Abschnitt 41 und ein die Öffnung 17 überragender Abschnitt 42 gebildet werden.

In einem nachfolgenden, in Figur 10c dargestellten Arbeitsschritt wird der überragende Abschnitt 42 in Richtung zu der äußeren Oberfläche 9 der Behälterwand 5 umgeformt und, vorzugsweise durch Heißsiegeln, an diese angeheftet. Hierbei wird der überragende Abschnitt 42 zu einem ebenen Abschnitt 43 umgeformt.

In Figur 11 ist eine dritte Ausführungsform eines Schutzbezuges 44 dargestellt. Der Schutzbezug 44 besteht aus einem mittleren Bereich 45, einem ebenen Bereich 46 und einem ebenen Bereich 47. Der mittlere Bereich 45 bedeckt die Schnittkante 13. Der ebene Bereich 46 haftet an der äußeren Oberfläche 9 der Behälterwand 57 und überdeckt den unmittelbar an die Schnittkante 13 angrenzenden Bereich 15 der Behälterwand 57. Der ebene Bereich 47 haftet an der inneren Oberfläche 8 der Behälterwand 57, und zwar unmittelbar auf der inneren Oberfläche 8 der Trägerschicht 10. Er bildet so zugleich die Schutzschicht der Behälterwand 57, wobei diese Schutzschicht die gesamte innere Oberfläche des Deckels 3 bedeckt.

Das Verfahren zur Herstellung und zum Anbringen des in Figur 11 dargestellten Schutzbezuges 44 ist in Figuren 12a bis 12f dargestellt.

Bei diesem Verfahren wird eine Behälterwand 57 vorgelegt, die nur aus einer Trägerschicht 10 aus Papier oder Karton besteht und die noch keine Öffnung enthält (vergleiche Figur 12a).

In einem ersten Arbeitsschritt wird eine Öffnung 17 in die Behälterwand 57 eingebracht, so daß eine Schnittkante 13 gebildet wird.

In einem nachfolgenden, in Figur 12c dargestellten Arbeitsschritt wird eine ebene Folie 48 der Behälterwand 57 zugeführt und mit der inneren Oberfläche 8 der Behälterwand 57 verbunden. Hierbei wird die Öffnung 17 der Behälterwand 57 durch die bogenartige Folie 48 vollständig überdeckt.

In einem nachfolgenden, in Figur 12d dargestellten Arbeitsschritt wird eine Öffnung 49, vorzugsweise durch Stanzen, in die Folie 48 eingebracht, so daß ein die Schnittkante 13 überlappender Abschnitt 50 der Folie 48 entsteht.

In einem nachfolgenden, in Figur 12e dargestellten Arbeitsschritt wird der überlappende Abschnitt 50 der Folie 48 durch die Öffnung 17 hindurch umgeformt, so daß ein durch die Öffnung 17 hindurchragender, hülsenförmiger Abschnitt 51 gebildet wird, wobei der nicht verformte, an der inneren Oberfläche 8 der Behälterwand 57 anliegende Teil der Folie 48 einen ebenen Abschnitt 52 der Folie 48 bildet. Der hülsenförmige Abschnitt 51 besteht aus einem die Schnittkante 13 abdeckenden Abschnitt 53 und einem die Öffnung 17 überragenden Abschnitt 54.

In einem nachfolgenden, in Figur 12f dargestellten Arbeitsschritt wird der überragende Abschnitt 54 in Richtung zu der äußeren Oberfläche 9 der Behälterwand 57 umgeformt und an diese, vozugsweise durch Heißsiegeln, angeheftet.

Das vorstehend zu Figuren 12a bis 12f beschriebene Verfahren könnte in entsprechender Weise auch zur Herstellung des in Figur 9 dargestellten Schutzbezuges 34 angewendet werden.

In Figuren 13 und 14 ist dargestellt, in welcher Weise die Aufreißlasche 7 derart verschlossen werden kann, daß die Öffnung 6 abgedichtet ist. Hierbei weist die Öffnung 6 den in Figur 11 dargestellten Schutzbezug 44 auf. Das dichtende Verschließen der Öffnung 6 geschieht dadurch, daß die Aufreißlasche 7 über die Öffnung 6 gelegt und an den ebenen Bereich 46 des Schutzbezuges 44, vorzugsweise durch Heißsiegeln, dichtend angeheftet wird.

Für den Schutzbezug 14, 34, 44 und gegebenenfalls auch für die Schutzschicht 11 wird thermoplastisches und/oder heißsiegelfähiges Folienmaterial, beispielsweise Polyäthylen, verwendet.

In Figur 15 ist ein Kartonband 55 ausschnittsweise dargestellt, das einer nicht gezeigten Maschine zur Herstellung von Behältern 1 vorgelegt wird. Das Kartonband 55 ist in eine Vielzahl von strichpunktiert dargestellten Segmenten 56 unterteilt, die bei der genannten Maschine aus dem Kartonband 55 ausgestanzt und jeweils zu Deckeln 3 weiterverarbeitet werden. Jedes Segment 56 enthält eine Öffnung 6, die mit einem Schutzbezug 14 versehen ist, sowie eine Aufreißlasche 7, die mit einem Ende 16 an der äußeren Oberfläche 9 des Segmentes 56 befestigt ist.

Bei dem Kartonband 55, das in üblicher Weise in Form einer Rolle vorgelegt wird, ist somit der Bereich der Öffnung 6 einschließlich des Kantenschutzes und des Verschlußelementes so weit vorbereitet, daß bei der Maschine zur Herstellung von Behältern 1 weniger Arbeitsgänge anfallen und weniger Abfall entsteht.

Selbstverständlich ist es alternativ zu den beschriebenen Ausführungsbeispielen möglich, die Trägerschicht 10 in nicht dargestellter Weise auf beiden Seiten mit einer Schutzschicht 11 zu versehen.

## Patentansprüche

1. Verfahren zum Abdecken einer Schnittkante einer Öffnung eines Behälters mit einem Schutzbezug, der einen die Schnittkante überdeckenden, hülsenförmigen Bereich, einen an der äußeren Oberfläche des Behälters haftenden ebenen Bereich und einen an der inneren Oberfläche des Behälters haftenden ebenen Bereich aufweist, dadurch gekennzeichnet, daß der Schutzbezug aus einer einstückigen Folie hergestellt wird, die der die Öffnung enthaltenden Behälterwand zugeführt und danach verformt wird, wobei wenigstens einer der ebenen Bereiche gebildet und an die Behälterwand angeheftet wird.

2. Verfahren nach Anspruch 1, dadurch gekennzeichnet, daß die Folie mit Hilfe von Wärme verformt und/oder an die Behälterwand angeheftet wird.

3. Verfahren nach Anspruch 1 oder 2, dadurch gekennzeichnet, daß die Folie an die innere und/oder an die äußere Oberfläche der Behälterwand durch Heißsiegeln angeheftet wird.

4. Verfahren nach Anspruch 1 bis 3, dadurch gekennzeichnet, daß eine aus einem ebenen Abschnitt und einem hülsenförmigen Abschnitt bestehende Folie gebildet wird, wobei der ebene Abschnitt an die innere Oberfläche oder an die äußere Oberfläche der Behälterwand angelegt und angeheftet wird und wobei der hülsenförmige Abschnitt derart in die Öffnung der Behälterwand geführt wird, daß ein die Öffnung überragender Abschnitt gebildet wird, wobei der überragende Abschnitt verformt und an die dem ebenen Abschnitt abgewandte Oberfläche der Behälterwand angeheftet wird.

5. Verfahren nach Anspruch 4, dadurch gekennzeichnet, daß der ebene Abschnitt und der hülsenförmige Abschnitt aus einer bogenartigen Folie geformt werden.

6. Verfahren nach Anspruch 5, dadurch gekennzeichnet, daß der ebene Abschnitt und der hülsenförmige Abschnitt geformt werden, nachdem die bogenartige Folie der Behälterwand zugeführt worden ist.

7. Verfahren nach Anspruch 5, dadurch gekennzeichnet, daß in die bogenartige Folie eine Öffnung eingebracht wird, deren Randbereich zu dem hülsenförmigen Abschnitt verformt wird.

8. Verfahren nach Anspruch 7, dadurch gekennzeichnet, daß die Öffnung in die bogenartige Folie eingebracht wird, nachdem diese der Behälterwand zugeführt worden ist.

9. Verfahren nach Anspruch 8, dadurch gekennzeichnet, daß die Öffnung derart in die bogenartige Folie eingebracht wird, daß ein Abschnitt bei der Folie gebildet wird, der die Öffnung der Behälterwand in Richtung zu deren Zentrum überlappt.

10. Verfahren nach Anspruch 4 bis 9, dadurch gekennzeichent, daß die Folie derart gegen die innere Oberfläche der Behälterwand angelegt und angeheftet wird, daß ihr ebener Abschnitt eine Schutzschicht für wenigstens einen Teil der inneren Oberfläche des Behälters bildet.

11. Verfahren nach Anspruch 4 bis 9, dadurch gekennzeichnet, daß die Folie derart gegen die innere Oberfläche und die äußere Oberfläche der Behälterwand angelegt wird, daß sie nur den an die Schnittkante angrenzenden Bereich der inneren Oberfläche oder der äußeren Oberfläche der Behälterwand bedeckt.

12. Verfahren nach Anspruch 4 bis 11, dadurch gekennzeichnet, daß an die innere Oberfläche oder an die äußere Oberfläche der Behälterwand eine bogenartige Folie derart angelegt wird, daß sie die die Schnittkante enthaltende Öffnung der Behälterwand überdeckt, worauf in die Folie eine Öffnung eingebracht wird, deren Querschnitt kleiner ist als der Querschnitt der die Schnittkante aufweisenden Öffnung der Behälterwand, so daß ein die Schnittkante in Richtung zu dem Zentrum der Öffnung der Behälterwand überlappender Abschnitt bei der Folie gebildet wird, worauf der überlappende Abschnitt zu einem hülsenförmigen Abschnitt verformt wird, der derart in die Öfffnung der Behälterwand geführt wird, daß ein die Schnittkante abdeckender Abschnitt und ein die Öffnung der Behälterwand überragender Abschnitt bei dem hülsenförmigen Abschnitt gebildet wird, wobei der nicht verformte Teil der Folie als an der Oberfläche anliegender, ebener Abschnitt verbleibt, worauf der die Öffnung der Behälterwand überragende Abschnitt des hülsenförmigen Abschnittes verformt und an die dem ebenen Abschnitt abgewandte Oberfläche der Behälterwand angeheftet wird.

13. Verfahren nach Anspruch 1 bis 3, dadurch gekennzeichnet, daß eine hülsenförmige Folie der Behälterwand zugeführt und derart in die Öffnung geführt wird, daß ein die Schnittkante abdeckender Abschnitt, ein die Öffnung über die äußere Oberfläche hinaus überragender Abschnitt und ein die Öffnung über die innere Oberfläche hinaus überragender Abschnitt gebildet werden, worauf die die Öffnung überragenden Abschnitte jeweils umgeformt und gegen die ihnen zugewandten Oberflächen der Behälterwand angeheftet werden.

14. Verfahren nach Anspruch 1 bis 13, dadurch gekennzeichnet, daß eine Aufreißlasche an die äußere Oberfläche der Behälterwand angeheftet wird, die mit dem Schutzbezug derart verbindbar ist, daß die Öffnung dichtend verschlossen wird.

15. Behälter mit wenigstens einer Behälterwand, die eine Öffnung aufweist, deren Schnittkante von einem Schutzbezug abgedeckt ist, der wenigstens einen Teil der inneren Oberfläche und der äußeren Oberfläche der Behälterwand überdeckt, dadurch gekennzeichnet, daß der Schutzbezug (14; 34; 44) einstückig hergestellt ist und nur den an die Öffnung (17) angrenzenden Bereich (15) der äußeren Oberfläche (9) der Behälterwand (5; 57) überdeckt.

16. Behälter nach Anspruch 15, dadurch gekennzeichnet, daß der Schutzbezug (14) nur den an die Öffnung (17) angrenzenden Bereich (15) der inneren Oberfläche (8) der Behälterwand (5) überdeckt.

17. Behälter nach Anspruch 15 oder 16, dadurch gekennzeichnet, daß der Schutzbezug (14; 34; 44) durch eine die Öffnung (17) durchdringende Hülse gebildet wird, die stirnseitig derart verformt ist, daß sie gegen die äußere Oberfläche (9) und gegen die innere Oberfläche (8) der Behälterwand (5; 57) anliegt.

18. Behälter nach Anspruch 15 bis 17, dadurch gekennzeichnet, daß die die Öffnung (17) enthaltende Behälterwand (5) durch einen Deckel (3) des Behälters (1) gebildet wird.

19. Behälter nach Anspruch 18, dadurch gekennzeichnet, daß der Schutzbezug (34; 44) die innere Oberfläche (8) des Deckels (3) bedeckt.

20. Behälter nach Anspruch 15 bis 19, dadurch gekennzeichnet, daß die Behälterwand (5; 57) wenigstens eine Trägerschicht (10) aus Papier oder Karton enthält.

21. Behälter nach Anspruch 15 bis 20, dadurch gekennzeichnet, daß die Behälterwand (5) wenigstens eine Schutzschicht (11) enthält.

22. Behälter nach Anspruch 15 oder 21, dadurch gekennzeichnet, daß der Schutzbezug (44) einstückig mit einer die innere Oberfläche (8) der Behälterwand (57) abdeckenden Schutzschicht hergestellt ist.

23. Behälter nach Anspruch 15 bis 22, dadurch gekennzeichnet, daß der Schutzbezug (14; 34; 44) an die innere Oberfläche (8) und/oder an die äußere Oberfläche (9) der Behälterwand (5; 57) angeheftet ist.

24. Behälter nach Anspruch 23, dadurch gekennzeichnet, daß der Schutzbezug (14; 34; 44) durch Heißsiegeln an die innere Oberfläche (8) und/oder an die äußere Oberfläche (9) der Behälterwand (5; 57) angeheftet ist.

25. Behälter nach Anspruch 15 bis 24, dadurch gekennzeichnet, daß eine Aufreißlasche (7) an die äußere Oberfläche (9) der Behälterwand (5; 57) angeheftet ist, wobei die Aufreißlasche (7) mit dem Schutzbezug (14; 34; 44) derart verbindbar ist, daß die Öffnung (6) dichtend verschlossen wird.
